# EUROPEAN PATENT APPLICATION

(11) **EP 4 718 898 A1**
(43) Date of publication of application: **01.04.2026**
(21) Application number: 24822575.7
(22) Date of filing: 31.05.2024
(51) Int. Cl.: H04W 8/24

(54) **COMMUNICATION METHOD, APPARATUS AND SYSTEM**

(30) Priority: 16.06.2023 CN 202310725396
(71) Applicant: Huawei Technologies Co., Ltd., Shenzhen, Guangdong 518129 (CN)
(72) Inventor: DENG, Taoyu, Shenzhen, Guangdong 518129 (CN); LI, Yan, Shenzhen, Guangdong 518129 (CN); LI, Yongcui, Shenzhen, Guangdong 518129 (CN)
(74) Representative: Körber, Martin Hans
(86) International application number: PCT/CN2024/096860
(87) International publication number: WO 2024/255623

(57) **Abstract**

This application provides a communication method, apparatus, and system, to enhance quality of service of a service. The method includes: A terminal device determines first service information, where the first service information is used to describe a feature of a service of the terminal device; and the terminal device sends the first service information to a core network, where the first service information is used by the core network to determine a policy corresponding to the service. In this solution, the terminal device may provide the first service information for the core network, so that the core network can determine the policy for the terminal device based on the first service information. In this way, transmission quality of a data packet of a service of the terminal device is controlled.

## Description

This application claims priority to Chinese Patent Application No. 202310725396.5, filed with the China National Intellectual Property Administration on June 16, 2023 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

Compared with a conventional mobile broadband (mobile broadband, MBB) service, a time sensitive communication (time sensitive communication, TSC) service, such as the Industrial Internet of Things, imposes a higher requirement on latency, and usually needs to carry data of different types of quality of service (quality of service, QoS). To meet the stringent requirements of the TSC service, a 5th-generation mobile communication technology core network (5th-generation mobile communication technology core network, 5GC) needs to be aware of more features of the TSC service to provide more accurate QoS and scheduling mechanisms to ensure the service latency. Therefore, a server of the TSC service may provide feature information of the TSC service for the 5GC, and the 5GC may configure a QoS rule based on the feature information of the service, to control transmission and scheduling of a data flow of the TSC service.

However, local settings of a terminal device may change features of a service. Consequently, a QoS rule configured by a core network may no longer meet a requirement of the service with changed features, causing a degradation of the quality of service of the service.

### SUMMARY

This application provides a communication method, apparatus, and system, to enhance quality of service of a service.

To achieve the foregoing objective, the following technical solutions are used in embodiments of this application:
According to a first aspect, an embodiment of this application provides a communication method. The method is applied to a terminal device, and the method includes: The terminal device determines first service information of the terminal device, where the first service information is used to describe a feature of a service of the terminal device; and The terminal device sends the first service information to a core network, where the first service information is used by the core network to determine a policy corresponding to the service of the terminal device.

In the method provided in this embodiment of this application, the terminal device may provide, for the core network, the first service information describing the feature of the service, so that the core network can determine, based on the first service information, the policy corresponding to the service of the terminal device. In this way, transmission quality of the service of the terminal device is controlled, and quality of service of the service is enhanced.

In a possible implementation of this application, the terminal device includes a first module and a second module. That the terminal device determines the first service information includes: The first module receives second service information from the second module, where the second service information includes an identifier of the service and/or an attribute of the service; and the first module determines the first service information based on the second service information. Sending the first service information to the core network includes: The first module sends the first service information to the core network. According to this solution, the first module in the terminal device may determine the first service information based on the second service information provided by the second module, and the first service information is sent to the core network through the first module.

For example, the first module is configured to receive and send information for the terminal device, and the second module is configured to run a client of the service.

In a possible implementation of this application, that the first module determines the first service information based on the second service information includes: The first module determines the first service information based on a mapping rule and the second service information. For example, the mapping rule includes a correspondence between the second service information and the first service information. According to this solution, the first module may determine, based on the mapping rule, the first service information corresponding to the second service information.

In a possible implementation of this application, the mapping rule is from the core network, or the mapping rule is locally configured on the first module. For example, the mapping rule is configured on the first module, or the mapping rule is configured on another module, such as a storage module, or the second module of the terminal device. In this way, the first module may obtain the mapping rule by interacting with the another device.

In a possible implementation of this application, the terminal device includes a first module and a second module. The first module is configured to receive and send information for the terminal device, and the second module is configured to run a client of the service. That the terminal device determines the first service information includes: The second module determines the first service information; correspondingly, the second module sends the first service information to the first module; and the first module receives the first service information from the second module. Sending the first service information to the core network includes: The first module sends the first service information to the core network. According to this solution, the first module may obtain the first service information from the second module and send the first service information to the core network.

In a possible implementation of this application, that the second module determines the first service information includes: The second module determines the first service information based on second service information, where the second service information includes an identifier of the service and/or an attribute of the service.

In a possible implementation of this application, before the first module receives the first service information from the second module, the method provided in this embodiment of this application further includes: The first module sends a mapping rule to the second module, where the mapping rule is used by the second module to determine the first service information based on second service information, and the second service information includes the identifier of the service and/or the attribute of the service.

In a possible implementation of this application, the mapping rule is from the core network, or the mapping rule is locally configured on the first module.

In a possible implementation of this application, that the first module receives the mapping rule from the core network includes: The first module obtains the mapping rule from the core network through any one of non-access stratum (non-access stratum, NAS) signaling, access stratum signaling, signaling used for access and mobility management, and signaling used for session management.

In a possible implementation of this application, that the terminal device sends the first service information to the core network includes: The terminal device sends an NAS message to the core network, where the NAS message includes the first service information; or the terminal device sends the first service information to the core network through an access network device.

In a possible implementation of this application, that the terminal device sends the first service information to the core network includes: The first module sends an NAS message to the core network, where the NAS message includes the first service information.

In a possible implementation of this application, the first module and the second module are deployed on a same chip of the terminal device, or the first module and the second module are deployed on two chips of the terminal device.

In a possible implementation of this application, the second service information identifies a service or a setting/attribute of the service. For example, the second service information may be one or more of the following content:
an APP ID, an IP 5-tuple/3-tuple, a resolution, a frame rate, a bit rate, a transport protocol, uplink and/or downlink burst arrival time, an uplink and/or downlink burst periodicity, an uplink and/or downlink burst data volume, an average burst size, an average burst data packet size, a maximum burst size, and a maximum burst data packet size.

In a possible implementation of this application, the second module includes an application layer and a system layer. That the second module determines the first service information based on the second service information includes: The application layer sends the second service information to the system layer; and the system layer determines the first service information based on the second service information.

In a possible implementation of this application, that the system layer determines the first service information based on the second service information includes: The system layer determines the first service information based on the second service information and a mapping rule.

In a possible implementation of this application, the second module includes an application layer and a system layer. That the second module determines the first service information based on the second service information includes: The system layer determines the second service information based on an event in the application layer; and the system layer determines the first service information based on the second service information.

In a possible implementation of this application, the second module includes an application layer and a system layer. That the second module determines the first service information based on the second service information includes: The application layer determines the first service information based on the second service information; and the application layer sends the first service information to the system layer.

In a possible implementation of this application, that the application layer sends the first service information or the second service information to the system layer includes: The application layer sends the first service information or the second service information to the system layer via an application programming interface, or the application layer carries the first service information or the second service information in a socket Socket. In the method, the application layer may send the first service information or the second service information to the system layer.

In a possible implementation of this application, that the second module sends the first service information to the first module of the terminal device includes: The system layer sends the first service information to the first module.

In a possible implementation of this application, that the second module determines the first service information based on the second service information includes: The second module determines the first service information based on the second service information and a mapping rule, where the mapping rule includes a correspondence between the second service information and the first service information.

In a possible implementation of this application, the mapping rule is from the first module, or the mapping rule is locally configured on the second module.

In a possible implementation of this application, when the mapping rule is from the first module, the method provided in this embodiment of this application may further include: The second module requests the first module to provide the mapping rule.

According to a second aspect, an embodiment of this application provides a communication apparatus. The communication apparatus can implement the method according to the first aspect or any possible implementation of the first aspect, and therefore can also achieve beneficial effects according to the first aspect or any possible implementation of the first aspect. The communication apparatus may be a terminal device, or may be an apparatus that supports a terminal device in implementing the method according to the first aspect or any possible implementation of the first aspect, such as a chip used in the terminal device. The communication apparatus can implement the foregoing method through software or hardware, or by executing corresponding software through hardware.

As an example, the communication apparatus may include a processing unit and a communication unit. The communication unit is configured to perform the receiving/sending related step that is performed by the terminal device according to the first aspect or any possible implementation of the first aspect. The processing unit is configured to perform the processing related step that is performed by the terminal device in the first aspect or any possible implementations of the first aspect.

For example, when the communication apparatus is a chip or a chip system in the terminal device, the processing unit may be a processor, and the communication unit may be a communication interface. For example, the communication interface may be an input/output interface, a pin, a circuit, or the like. The processing unit executes instructions stored in a storage unit, to cause the terminal device to implement the communication method according to the first aspect or any possible implementation of the first aspect. The storage unit may be a storage unit (such as a register or a cache) in the chip, or may be a storage unit (such as a read-only memory or a random-access memory) that is located outside the chip but in the terminal device.

According to a third aspect, an embodiment of this application provides a communication apparatus. The communication apparatus includes a module configured to perform the method according to the first aspect or any possible implementation of the first aspect.

According to a fourth aspect, an embodiment of this application provides a computer-readable storage medium. The computer-readable storage medium stores a computer program or instructions. When the computer program or instructions are run on a computer, the computer is caused to perform the communication method in the first aspect or any possible implementations of the first aspect.

According to a fifth aspect, an embodiment of this application provides a computer program product including instructions. When the instructions are run on a computer, the computer is caused to perform the communication method according to the first aspect or any possible implementation of the first aspect.

According to a sixth aspect, an embodiment of this application provides a communication apparatus, configured to implement the method according to any possible implementation of the first aspect. The communication apparatus may be a second module in the foregoing terminal device, an apparatus including the second module in the foregoing terminal device, or a component (such as a first module) used in the terminal device. Alternatively, the communication apparatus may be the foregoing first module, or an apparatus including the foregoing first module, or the communication apparatus may be a component (such as a chip) used in the first module. The communication apparatus includes a corresponding module or unit for implementing the foregoing method. The module or unit may be implemented through hardware or software, or by executing corresponding software through hardware. The hardware or the software includes one or more modules or units corresponding to the foregoing functions.

It should be understood that the communication apparatus described in the sixth aspect may further include a bus and a memory. The memory is configured to store code and data. Optionally, at least one processor communication interface and the memory are coupled to each other.

According to a seventh aspect, an embodiment of this application provides a communication apparatus. The communication apparatus includes a processor and a memory. The memory is configured to store program instructions, the memory is configured to store program instructions, and the processor is configured to execute the program instructions in the memory, to cause the communication apparatus to perform the method according to the first aspect or any possible implementation of the first aspect. For example, the communication apparatus may be a terminal device, or may be a chip used in the terminal device.

According to an eighth aspect, an embodiment of this application provides a chip system. The chip system includes a processing module, and the processing module is coupled to a storage module, to perform the method according to the first aspect or any possible implementation of the first aspect.

According to a ninth aspect, an embodiment of this application provides a chip system. The chip system includes at least one processor, and the processor is configured to read and execute a computer program stored in a memory, to perform the method according to the second aspect or any possible implementation of the second aspect.

Optionally, the chip system may be a single chip or a chip module including a plurality of chips.

Optionally, the chip system further includes a memory. The memory and the processor are connected via a circuit or a wire.

Optionally, the chip system further includes a communication interface. The communication interface is configured to communicate with a module other than the chip.

According to a tenth aspect, an embodiment of this application provides a terminal device. The terminal device includes a first module and a second module. The first module is configured to perform the actions performed by the first module in the method according to the first aspect or any possible implementation of the first aspect. The second module is configured to perform the actions performed by the second module in the method according to the first aspect or any possible implementation of the first aspect.

According to an eleventh aspect, an embodiment of this application provides a chip. The chip includes a first module and a second module. The first module is configured to perform the actions performed by the first module in the method according to the first aspect or any possible implementation of the first aspect. The second module is configured to perform the actions performed by the second module in the method according to the first aspect or any possible implementation of the first aspect.

According to a twelfth aspect, an embodiment of this application provides a terminal device. The terminal device includes the chip according to the eleventh aspect.

Any apparatus, computer storage medium, computer program product, chip, or communication system provided above is configured to perform the corresponding method provided above. Therefore, for beneficial effects that can be achieved, refer to the beneficial effects of the corresponding solution in the corresponding method provided above. Details are not described herein again.

### BRIEF DESCRIPTION OF DRAWINGS

FIG. 1 is a diagram of a structure of a communication system according to an embodiment of this application;
FIG. 2 is a diagram of a structure of another communication system according to an embodiment of this application;
FIG. 3A is a diagram of an internal structure of a terminal device according to an embodiment of this application;
FIG. 3B is a diagram of an internal structure of another terminal device according to an embodiment of this application;
FIG. 4 is a diagram of interaction between modules within a terminal device according to an embodiment of this application;
FIG. 5A is a diagram of software modules within a terminal device according to an embodiment of this application;
FIG. 5B is a diagram of interaction between software modules according to an embodiment of this application;
FIG. 6 is a schematic flowchart of a communication method according to an embodiment of this application;
FIG. 7 is a schematic flowchart of another communication method according to an embodiment of this application;
FIG. 8 is a schematic flowchart of still another communication method according to an embodiment of this application;
FIG. 9 is a schematic flowchart of a specific embodiment of a communication method according to an embodiment of this application;
FIG. 10 is a schematic flowchart of a specific embodiment of still another communication method according to an embodiment of this application;
FIG. 11 is a diagram of a structure of a communication apparatus according to an embodiment of this application;
FIG. 12 is a diagram of a structure of a communication device according to an embodiment of this application; and
FIG. 13 is a diagram of a structure of a chip according to an embodiment of this application.

### DESCRIPTION OF EMBODIMENTS

To clearly describe technical solutions in embodiments of this application, terms such as "first" and "second" are used in the embodiments of this application to distinguish between identical or similar items that have essentially the same functions and effects. For example, the first module and the second module are merely used to distinguish different modules, and a sequence of the first module and the second module is not limited. A person skilled in the art may understand that the terms such as "first" and "second" do not limit a quantity or an execution sequence, and the terms such as "first" and "second" do not indicate a definite difference.

It should be noted that in this application, the term such as "example" or "for example" is used to represent giving an example, an illustration, or a description. Any embodiment or design scheme described as an "example" or "for example" in this application should not be explained as being more preferred or advantageous than another embodiment or design scheme. To be precise, use of the word such as "example" or "for example" is intended to present a relative concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions provided in embodiments of this application are also applicable to similar technical problems.

In this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, and c may indicate: a, b, c, a and b, a and c, b and c, or a, b, and c, where a, b, and c may be singular or plural.

Steps in a communication method provided in the embodiments of this application are merely examples. Not all steps are mandatory steps, or not all content in each piece of information or message is mandatory. In a use process, addition or deletion may be performed as required.

A same step or steps or messages having a same function in embodiments of this application may be mutually referenced in different embodiments.

The system architecture and the service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions provided in embodiments of this application are also applicable to similar technical problems. In embodiments of this application, an example in which the provided method is applied to an NR system or 5th generation mobile networks or 5th generation wireless systems (5th generation mobile networks or 5th generation wireless systems, 5th-Generation, 5G) network is used for description.

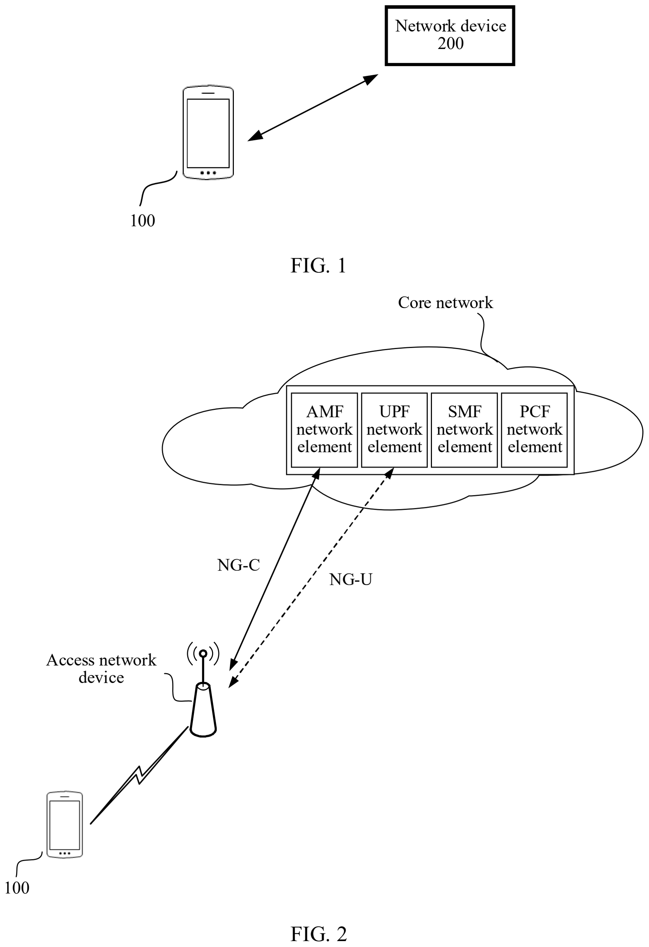

FIG. 1 is a diagram of an architecture of a communication system according to an embodiment of this application. The system includes:
a terminal device 100 and a network device 200.

For example, in this embodiment of this application, the terminal device 100 may communicate with the network device 200. For example, the terminal device 100 may send service feature information of the terminal device 100 to the network device 200.

The service feature information is used to describe a feature of a service of the terminal device 100. The service feature information is used by a core network to determine a policy corresponding to the service for the terminal device 100. Alternatively, the service feature information is used to obtain information used by the core network to determine a policy, and the policy is used to control transmission quality of a data packet of the service of the terminal device 100.

For example, the service feature information in this embodiment of this application is service information that can be identified by the core network.

The network device in this embodiment of this application may be an access network device (or referred to as an access network station), or may be a core network device. A detailed description of each device will be provided below.

In a first case, the network device 200 may be an access network device (or referred to as an access network station).

When the network device 200 is an access network device, as shown in FIG. 2, the network device 200 may be further connected to a device in a core network (core network, CN), which is referred to as a core network device below. The access network device refers to a device that provides network access functionality, such as a radio access network (radio access network, RAN) or a base station. The network device 200 may specifically include a base station (base station, BS) (such as an RAN base station), or include a base station, a radio resource management device configured to control the base station, and the like. The network device may further include a relay station (relay device), an access point, a base station in a future 5G network, a base station in a future evolved public land mobile network (public land mobile network, PLMN) network, an NR base station, or the like. The network device 200 may be a wearable device or an in-vehicle device. Alternatively, the network device 200 may be a communication chip having a communication module.

For example, the network device 200 includes, but is not limited to, a gNodeB (gNodeB, gNB) in 5G, an evolved node B (evolved node B, eNB) in a long term evolution (long term evolution, LTE) system, a radio network controller (radio network controller, RNC), a radio controller in a cloud radio access network (cloud radio access network, CRAN) system, a base station controller (base station controller, BSC), a home base station (such as a home evolved nodeB or home node B, HNB), a baseBand unit (baseBand unit, BBU), a transmitting and receiving point (transmitting and receiving point, TRP), a transmitting point (transmitting point, TP), a mobile switching center, a base transceiver station (base transceiver station, BTS) in a global system for mobile communication (global system for mobile communication, GSM) or code division multiple access (code division multiple access, CDMA) network, a nodebase station (nodebase station, NB) in wideband code division multiple access (wideband code division multiple access, WCDMA), a base station device in a future 5G network, an access network device in a future evolved PLMN network, a wearable device, or an in-vehicle device.

The access network device may be connected to the core network device via an NG interface. The NG interface refers to an interface between a radio access network and a 5G core network. The NG interface is divided into an NG-C interface and an NG-U interface. The NG-C interface is a control plane interface used to transmit control plane data. The NG-U interface is a user plane interface used to transmit user plane data. For example, the access network device may be connected to an access and mobility management function (Access and Mobility Management Function, AMF) network element via the NG-C interface. For example, the access network device may be connected to a user plane function (User Plane Function, UPF) network element via the NG-U interface. The NG-C interface may alternatively be referred to as a control plane interface between the NG-RAN and the 5GC. The NG-U interface may alternatively be referred to as a user plane interface between the NG-RAN and the 5GC.

When the network device 200 is an access network device, the terminal 100 may communicate with the access network device via a Uu interface.

In a second case, the network device 200 may be a core network device.

The core network device may be configured to provide a core network service for a terminal of an access network device. The core network device may correspond to different devices in different systems. For example, in 3G, the core network device may correspond to a serving general packet radio service (general packet radio service, GPRS) support node (serving GPRS support node, SGSN) and/or a gateway GPRS support node (gateway GPRS Support Node, GGSN). In 4G, the core network device may correspond to a policy and charging rules function (policy and charging rules function, PCRF), a mobility management entity (mobility management entity, MME), and/or a serving gateway (serving gateway, S-GW). In 5G, the core network device may correspond to a policy control function (policy control function, PCF) network element, an access and mobility management function (access and mobility management function, AMF) network element, a session management function (session management function, SMF) network element, or a user plane function (user plane function, UPF) network element. In this embodiment of this application, a 5G network is used as an example, but the scope of application of this embodiment of this application is not limited to the 5G network. The policy mentioned in this embodiment of this application may be a policy used for controlling quality of service (quality of service, QoS) in 5G, or may be a policy used for controlling a service flow in another generation of mobile communication network. The 5G-AN/CN in this embodiment may alternatively be an access network/core network in another generation of mobile communication network.

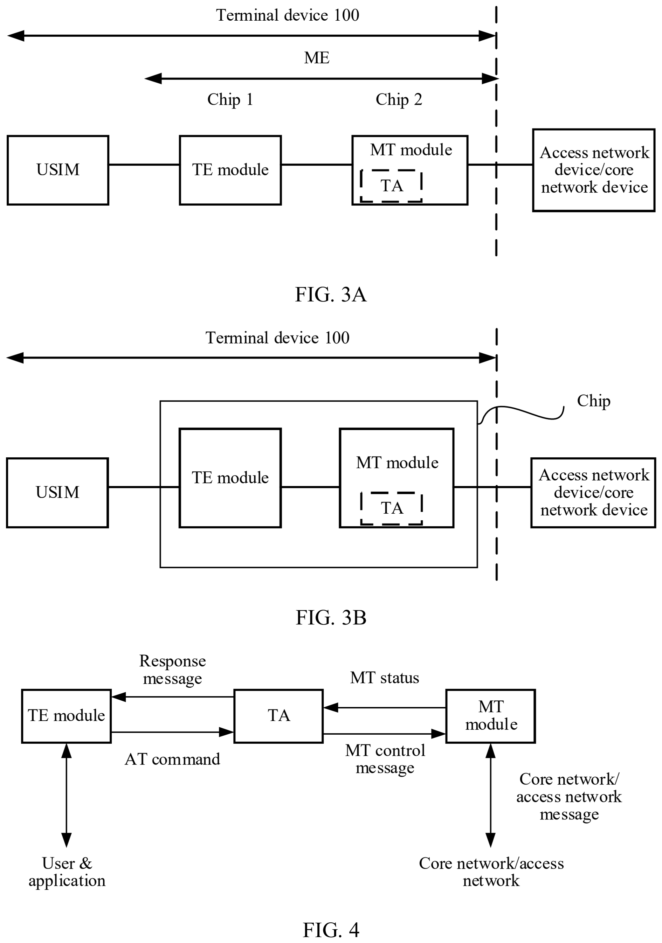

FIG. 3A is a diagram of a structure of a terminal device 100 according to an embodiment of this application. The terminal device 100 may include a terminal equipment (terminal equipment, TE) module, a mobile termination (mobile termination, MT) module, and a universal subscriber identity module (universal subscriber identity module, USIM).

The TE module refers to a module that provides necessary functionality required for a user access protocol operation, and may be a chip of the terminal device 100. An application layer and an operating system layer run on the chip.

The application (application, APP) layer is software that provides functionality required by services. Each application may belong to a plurality of services.

The OS (operating system, operating system) layer is a group of interrelated system software programs that manage and control device operations, utilize and run hardware and software resources, and provide common services to organize user interaction.

The MT module generally refers to a chip that has modulation and demodulation capabilities in the terminal device 100, and provides a capability of sending and receiving a radio signal. As shown in FIG. 3A, the MT module includes a terminal adaptor (terminal adaptor, TA).

It may be understood that in FIG. 3A, an example in which the TE module and the MT module are two independent chips, namely Chip 1 and Chip 2, is used. In practical application, the TE module and the MT module in the terminal device may be integrated into a single chip. That is, as shown in FIG. 3B, the TE module and the MT module are used as two modules within a same chip.

FIG. 4 shows signaling used for communication between modules within a terminal device. As shown in FIG. 4, a TE module may send AT commands (Attention cmds) to a TA.

The AT commands are sent from the TE module to the TA. The TE send the AT commands via the TA to control functionality of an MT, so as to interact with network services. A user can utilize the AT commands to control operations such as calling, messaging, phonebook management, data services, and fax transmission.

There are a plurality of types of AT commands, including the command prefix +C reserved for Digital Cellular, the command prefix +G representing a general command, the command prefix +CG representing a packet domain command, and the like. The packet domain command may be used to define, modify, and activate/deactivate a PDP context (packet data protocol context, packet data protocol context) on the MT, to implement the function of initiating a QoS request to the 5G-AN/CN, and the like. When a link layer protocol of an interface supports a plurality of contexts, the plurality of contexts can be activated.

Communication between the TE module and the TA may be performed through standard signaling (such as an AT command), or in a non-standard manner. A specific manner of communication between the TE module and the TA may be set by a user or a manufacturer. This is not limited in this embodiment of this application.

Optionally, as shown in FIG. 4, the TA may further return a response message to the TE module. The TA may interact with the MT module through MT control signaling.

Certainly, the MT module may also feed back an MT status (status) to the TA. The functionality of the TA may be considered as a part of the MT module. The TA may function as a translator, which enables the MT module and the TE module to identify messages sent by each other, such as AT commands.

The MT module mentioned in this embodiment of this application may be considered to have the functionality of both the MT and the TA.

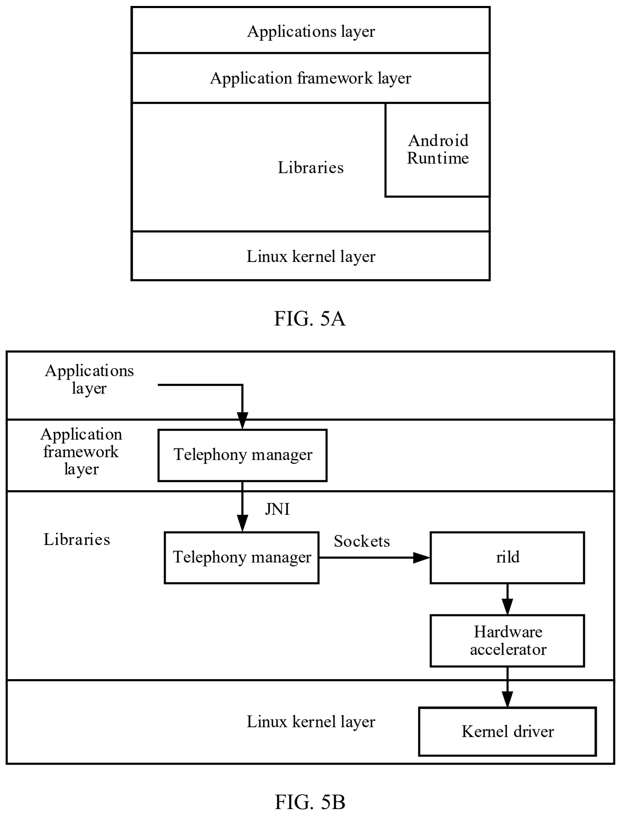

FIG. 5A illustrates an Android architecture by using an example in which a terminal device runs the Android operating system.

As shown in FIG. 5B, the Android architecture includes four layers and five parts: an applications (applications, APP) layer, an application framework layer (application framework), a system runtime library layer (system runtime library layer), and a Linux kernel layer (Linux kernel). The system runtime library layer includes libraries (Libraries) and Android Runtime (Android Runtime).

Applications layer: The Android operating system is released with a core application package. As an example, the application package includes a home screen (Home), an E-mail client, an SMS/MMS short message program, a calendar, a map, a browser, a contact management program, and the like.

The application framework layer provides the applications layer with an API framework that can be used to fully access core applications, and provides components such as an activity manager, a window manager, a resource manager, and a hardware service.

System runtime library layer: The system runtime library layer includes two parts: the libraries and Android Runtime. The libraries refer to some C/C++ libraries included in Android. These libraries can be used by different components in the Android operating system, and provide services for developers through an application framework. Android Runtime includes two parts: core libraries and a Dalvik virtual machine. The core libraries provide most of the functionality of Java language core libraries, and provide the application framework layer with an interface for invoking an underlying native library via a JNI herein. The Dalvik virtual machine is implemented to efficiently run a plurality of VMs at the same time. Each Android application runs in its own process and has an independent Dalvik virtual machine instance.

Linux kernel layer: Android depends on core system services provided by a Linux kernel version 2.6, such as security, memory management, process management, a network stack, and a driver module. As an abstraction layer, the kernel exists between a software stack layer and a hardware layer.

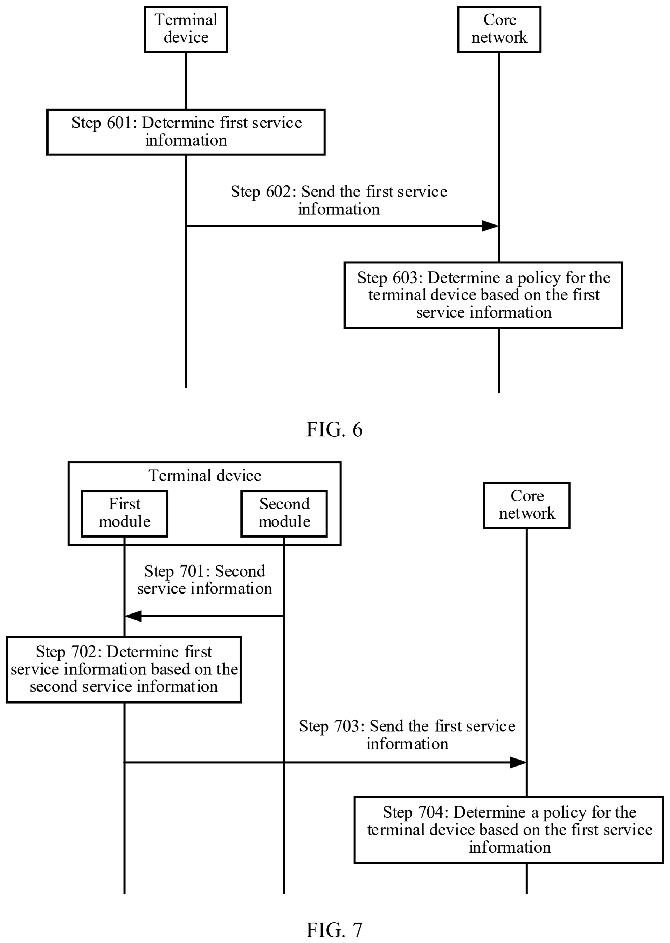

A process of invoking Telephony Manager is taken as an example. When the APP layer attempts to access a network, it connects to TELEPHONY_SERVICE and binds to a native service TelephonyManager (TelephonyManager). This binding establishes Sockets that trigger a radio interface layer daemon rild. The request then traverses a hardware accelerator libril.so and ultimately reaches a Linux kernel layer, as shown in FIG. 6.

This embodiment of this application is not limited to the terminal running the Android operating system. In FIG. 5A and FIG. 5B, an example in which the terminal device runs the Android operating system is used to describe the framework of the applications layer within the TE module and the interaction method of the APP layer and the OS layer.

Certainly, the terminal device in this embodiment of this application may alternatively use a system other than the Android operating system, such as the iOS operating system, the HarmonyOS operating system, or a windows operating system.

The terminal device refers to a device that allows users to access network services. In the 3GPP standard, an interface between the terminal device and a network is a radio interface.

The terminal (terminal) may include various handheld devices, in-vehicle devices, wearable devices, and computing devices, or other processing devices connected to a wireless modem that possess wireless communication functionality. The terminal may further include a subscriber unit (subscriber unit), a cellular phone (cellular phone), a smart phone (smart phone), a wireless data card, a personal digital assistant (personal digital assistant, PDA) computer, a tablet computer, a wireless modem (modem), a handheld (handheld) device, a laptop computer (laptop computer), a cordless phone (cordless phone) or a wireless local loop (wireless local loop, WLL) station, a machine type communication (machine type communication, MTC) terminal, user equipment (user equipment, UE), a mobile station (mobile station, MS), a terminal device (terminal device), relay user equipment, or the like. The relay user equipment may be, for example, a 5G residential gateway (residential gateway, RG). For ease of description, in this application, the devices mentioned above are collectively referred to as terminals.

It should be understood that the terminal device in this embodiment of this application may alternatively be a terminal device in the Internet of Things or a terminal in a plurality of vertical industry application fields of ports, intelligent factories, railway transportation, logistics, unmanned aerial vehicles, and autonomous vehicles, such as a mobile robot (mobile robot), an automated guided vehicle (automated guided vehicle, AGV), an autonomous vehicle, a control device and a sensor on a train, or a control device and a sensor (sensor) deployed in a factory.

As an example, in this embodiment of this application, the terminal device may alternatively be a wearable device. The wearable device may alternatively be referred to as a wearable intelligent device, and is a general term for wearable devices that are intelligently designed and developed using a wearable technology for daily wear, such as glasses, gloves, a watch, clothing, and shoes. The wearable device is a portable device that can be directly worn on the body or integrated into clothes or an accessory of a user. The wearable device is not only a hardware device, but also achieves powerful functionality through software support, data interaction, and cloud interaction. In a broad sense, wearable intelligent devices include full-featured and large-sized devices that can achieves complete or partial functionality without depending on smart phones, such as smart watches or smart glasses, and devices that dedicated to only one type of application function and need to work together with other devices such as smart phones, for example, various smart bands or smart jewelry for monitoring physical signs. The terminal may alternatively be a sensor device used in a factory.

In this embodiment of this application, "A sends XX information to B" may refer to A directly sending the information to B, or may refer to A sending the information to B via an intermediate network element, a device, a module, a node, or the like. This is uniformly described herein, and details are not described again subsequently.

In the embodiments of this application, a specific structure of an entity for performing a communication method is not specially limited in the embodiments of this application, provided that the entity can run a program that records code for performing the communication method in the embodiments of this application, to perform communication by the communication method in the embodiments of this application. For example, the entity for performing the communication method provided in the embodiments of this application may be a functional module that is in a terminal device and that can invoke and execute a program, or may be a communication apparatus used in the terminal device, for example, a chip, a chip system, or an integrated circuit. The chip, the chip system, and the integrated circuit may be disposed inside the terminal device, or may be independent of the terminal device. This is not limited in the embodiments of this application.

FIG. 6 shows a communication method according to an embodiment of this application. As shown in FIG. 6, the method is applied to a terminal device, and the method includes:

Step 601: The terminal device determines first service information.

For example, the first service information is used to describe a feature of a service of the terminal device. The first service information may alternatively be referred to as service feature information. The first service information is information that can be identified by a core network.

For example, the first service information is used by the core network to determine a policy corresponding to the service for the terminal device. For example, the policy is used to control transmission quality of a data packet of the service.

For example, the first service information of the terminal device may be service information at a granularity of the terminal device. In this case, the policy determined by the core network is a policy configured for the terminal device.

Alternatively, the first service information of the terminal device may be service information at a granularity of a specific service of the terminal device. In this case, the first service information of the terminal device may refer to service feature information of the service of the terminal device. In this case, the policy determined by the core network for the terminal device is a policy determined for the service.

The service may refer to an APP, a process, an operating system function, or the like of the terminal device. The service may use one or more identifiers of an APP ID (APP ID), an IP 5-tuple/3-tuple, and a packet filter (packet filter), or may use another identifier that can distinguish the service. This is not limited. The service may run at an application layer or an operating system layer. If the service runs at the operating system layer, the operating system layer may obtain the service information and determine the service feature information. In this case, the application layer and the operating system layer may be regarded as a same layer. This is applicable to all embodiments. In this embodiment, actions performed by the application layer and the operating system layer are considered as actions performed by this layer.

As an example, the first service information is used to reflect the feature of the service. For example, the first service information may include one or more of the following content:
a periodicity, a maximum burst volume/size, uplink and/or downlink burst arrival time, an uplink and/or downlink burst data volume, a frame rate, a bit rate, a resolution, a transport protocol, a burst size, a burst data packet size, a traffic direction, a time domain, time to live, a burst arrival time adaptation or burst arrival time window capability, and a periodicity range.

It may be understood that in addition to these parameters listed in this embodiment of this application, the first service information may be any other information that can reflect the feature of the service/application. This is not limited in embodiments of this application.

Step 602: The terminal device sends the first service information to a core network, and correspondingly, the core network receives the first service information from the terminal device.

For example, the terminal device may send the first service information to the core network in one or more of the following manners.

As an example, the terminal device may send the first service information to the core network through an access network device.

As an example, the terminal device may send the first service information to the core network via an NAS message.

As an example, the terminal device may send the first service information to a core network device in the core network. For example, the core network is a 5G core network, and the core network device may be any network element in the core network, such as a PCF network element, an SMF network element, and an AMF network element.

Step 603: The core network determines a policy for the terminal device based on the first service information.

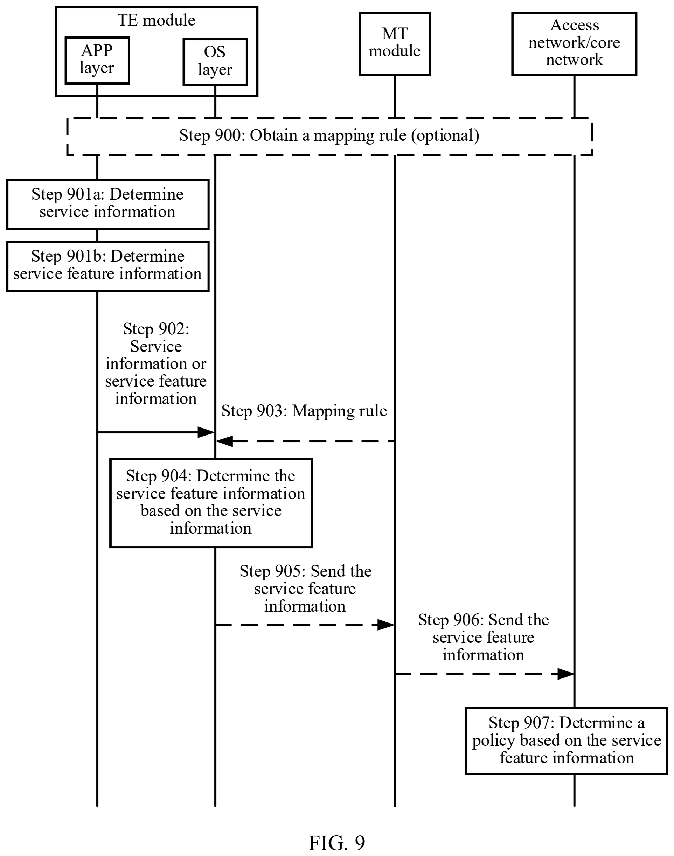

For a specific implementation of determining, by the core network, the policy for the terminal based on the first service information, refer to the following description in step 907 shown in FIG. 9. Details are not described herein again.

In the method provided in this embodiment of this application, the terminal device determines the first service information, and then the terminal device sends the first service information to the core network. Because the first service information is used to describe the feature of the service of the terminal device, after receiving the first service information, the core network may determine, based on the first service information provided by the terminal device, the policy corresponding to the service. Therefore, in a scenario in which there is no AF network element or the AF network element cannot interact with the 5G-AN/CN, the terminal device may provide the core network with the first service information used to determine the policy for the terminal device, and the core network determines the policy for the terminal device based on the first service information, to control transmission quality of the data packet of the service of the terminal device. The policy corresponds to the service, and the policy may be used to control transmission quality, a routing rule, and the like of the data packet of the service.

As an example, the terminal device includes a first module and a second module. The first module is configured for the terminal device to receive and send information, and the second module is configured to run a client of the service.

The first module is configured for the terminal device to receive and send information, and may be configured for the terminal device to receive and send information from an access network and/or a core network.

As an example, the second module is configured to provide necessary functionality for a user operation. For example, as shown in FIG. 3A and FIG. 3B, the second module may be a TE module within the terminal device. The first module is a communication function module of the terminal device. For example, as shown in FIG. 3A and FIG. 3B, the first module may be an MT module of the terminal device.

For example, the first module and the second module may be different modules deployed on a same chip within the terminal device, as shown in FIG. 3B. The first module and the second module may be different modules deployed on different chips within the terminal device, or the first module and the second module are two chips independently deployed within the terminal device, as shown in FIG. 3A. This is not limited in this embodiment of this application.

In this embodiment of this application, the first service information may be determined by the first module within the terminal device based on second service information of the terminal device. Alternatively, the first service information may be obtained by the first module within the terminal device from the second module. To be specific, the second module determines the first service information and provides the first service information to the first module. Descriptions are separately provided below.

Case 1: The first module determines the first service information based on second service information of the terminal device.

Correspondingly, as shown in FIG. 7, step 601 in this embodiment of this application may be implemented through step 701 and step 702.

Step 701: A second module sends second service information to a first module, and correspondingly, the first module receives the second service information from the second module.

For example, the second service information includes an identifier of a service and/or an attribute of the service.

As an example, the second service information is used to identify the service or settings/attributes of the service.

For example, the second service information may be one or more of the following content:
an APP ID, an IP 5-tuple/3-tuple, a resolution, a frame rate, a bit rate, a transport protocol, uplink and/or downlink burst arrival time, an uplink and/or downlink burst periodicity, an uplink and/or downlink burst data volume, an average burst size, an average burst data packet size, a maximum burst size, and a maximum burst data packet size.

It may be understood that in addition to these parameters listed in this embodiment of this application, the second service information may be any other information that can reflect some attributes, settings, features, and the like of the service/application. This is not limited in this embodiment of this application.

For example, in a scenario in which the first module and the second module are independently deployed, that is, when the first module and the second module are deployed on different chips or the first module and the second module are different chips, the second module may send a first command to the first module. The first command includes the second service information. For example, the first command may be a standardized command, such as an AT command (such as the AT command +CGTFT, or a new AT command, or an AT command +CMGC for carrying a short message). Certainly, first signaling may alternatively be non-standard signaling. For example, the first module and the second module transfer the second service information (such as an interface defined by a chip manufacturer Qualcomm) via a private interface.

In a scenario in which the first module and the second module are deployed on a same chip, the second module transfers the second service information to the first module in a manner of internal inter-process communication, a private interface, or the like.

Step 702: The first module determines first service information based on the second service information.

It may be understood that when the second module provides the first module with the second service information, the first module determines the first service information based on the second service information.

As an example, step 702 may be implemented in the following manner: The first module determines the first service information based on a mapping rule and the second service information.

For example, the mapping rule is at least used to determine the first service information based on the second service information.

For example, the mapping rule includes one or more of the following: a correspondence between the first service information and the second service information, or a method for determining the first service information based on the second service information, or a function of converting the second service information into the first service information.

An example in which the mapping rule includes the correspondence between the first service information and the second service information is used. As shown in Table 1, if the second service information is an APP ID, and service feature information corresponding to the APP ID is an average burst traffic size and a tolerable packet loss rate, the mapping rule includes the average burst traffic size and the tolerable packet loss rate that correspond to the APP ID.

**Table 1 Mapping rule**

| Second service information | First service information |
|---|---|
| APP ID | Average burst traffic size and tolerable packet loss rate |
| Frame rate | Periodicity |
| Uplink and/or downlink burst data volume | Uplink and/or downlink burst data volume |

It should be noted that Table 1 is merely an example of the mapping rule, and does not specifically limit the correspondence between the first service information and the second service information. In practical application, the content of the mapping rule may be the correspondence between the first service information and the second service information that is established as needed.

For example, as shown in Table 1, if the second service information is the frame rate, the first module may determine, based on Table 1, that the first service information corresponding to the frame rate is the periodicity.

For example, as shown in Table 1, if the second service information is the uplink and/or downlink burst data volume, the first module may determine, based on Table 1, that the first service information corresponding to the uplink and/or downlink burst data volume is the uplink and/or downlink burst data volume.

It may be understood that in this embodiment of this application, content of the first service information and content of the second service information may be the same. Certainly, the content of the first service information and the content of the second service information may alternatively be different. This is not limited in this embodiment of this application.

For example, the mapping rule includes the method for determining the first service information based on the second service information. The method for determining the first service information based on the second service information may be mathematical formula calculation, determination through internal logic of the terminal device (internal logic implemented at an APP layer/an OS layer/chip hardware), or the like. The mapping rule may alternatively be a table. For example, a specific type of service information needs to be calculated using a formula to obtain corresponding first service information. For example, if the mapping rule indicates that a method A is used to convert the second service information into the first service information, the first module or the second module may subsequently convert the second service information into the first service information by the method A.

For example, the mapping rule includes the function of converting the second service information into the first service information. For example, the function of converting the second service information into the first service information may refer to a machine learning model, a complex function, or the like. That is, after obtaining this function, the terminal may use this function to obtain the first service information corresponding to the second service information, or may have a table. For example, a specific type of service information needs to be input into a specific model to obtain corresponding service feature information.

For example, the second service information is a resolution, and the mapping rule indicates that the first service information corresponding to the resolution is an uplink and/or downlink burst arrival time. For another example, the mapping rule indicates uplink and/or downlink burst arrival time corresponding to different resolutions. For example, a resolution 1 corresponds to uplink and/or downlink burst arrival time 1, and a resolution 2 corresponds to uplink and/or downlink burst arrival time 2. In this case, the first module may determine, based on the resolution 1, that the first service information of the terminal device is the uplink and/or downlink burst arrival time 1.

It may be understood that the mapping rule may be configured locally on the first module. For example, the mapping rule is configured on a storage module of the terminal device, or configured on the first module of the terminal device, or configured on the second module of the terminal device. When the mapping rule is configured on the storage module of the terminal device or the second module of the terminal device, the terminal device may obtain the mapping rule by interacting with the storage module or the second module.

The mapping rule may be agreed on by a protocol (for example, a service level agreement (Service Level Agreement, SLA) between an operator and a service provider). Alternatively, the mapping rule may be obtained by the terminal device from a server of the service. Certainly, the mapping rule may alternatively be obtained by the first module from a core network. For example, the first module obtains the mapping rule from the core network through any one of non-access stratum signaling, access stratum signaling, signaling used for access and mobility management, and signaling used for session management.

As an example, as shown in FIG. 7, step 602 in this embodiment of this application may be implemented through step 703: The first module sends the first service information to a core network, and correspondingly, the core network receives the first service information from the first module of the terminal device.

For a specific implementation of step 704, refer to step 603. Details are not described herein again.

For the first module, the mapping rule is from the core network, or the mapping rule is locally configured on the first module, or the mapping rule is locally configured on the second module. In the case that the mapping rule is locally configured on the second module, the first module may obtain the mapping rule from the second module.

Case 2: The first module obtains the first service information from the second module.

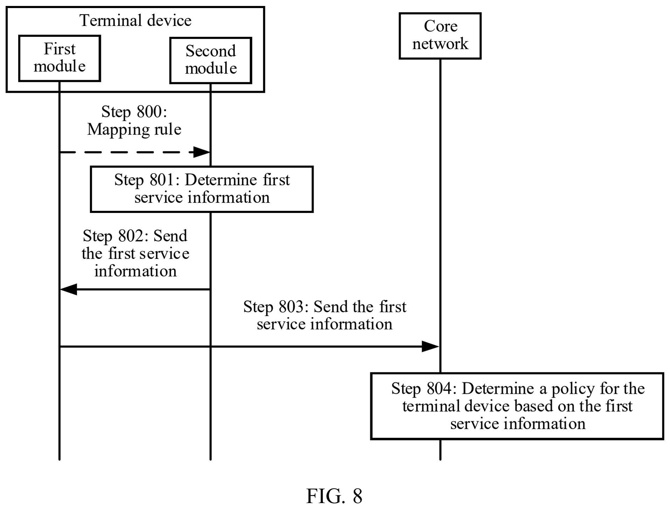

FIG. 8 is a schematic flowchart of another communication method according to an embodiment of this application. With reference to FIG. 8, step 601 in this embodiment of this application may be implemented through step 801 and step 802.

Step 801: A second module of a terminal device determines first service information.

For example, the first service information is used to describe a feature of a service of the terminal device, and the second module is configured to run a client of the service.

Step 802: The second module sends the first service information to a first module of the terminal device, and correspondingly, the first module receives the first service information from the second module. The first module is configured for the terminal device to receive and send information.

Optionally, before step 801, the method provided in this embodiment of this application may further include:
Step 800: The first module sends a mapping rule to the second module, and correspondingly, the second module receives the mapping rule from the first module.

For content of the mapping rule, refer to the description in the foregoing embodiment. Details are not described herein again.

Certainly, for the second module, the mapping rule is locally configured on the second module. For example, the mapping rule is configured on a storage module of the second module. Alternatively, the mapping rule is obtained by the second module from the first module and is stored in the storage module of the second module. In a case that the mapping rule is locally configured on the second module, step 800 may be omitted.

It may be understood that the first module may actively/periodically send the mapping rule to the second module. For example, after obtaining the mapping rule from a core network, the first module may send the mapping rule to the second module. Alternatively, in a case that the first module detects that a mapping rule locally configured on the first module is different from a mapping rule sent by the core network, the first module may send the mapping rule to the second module.

In addition, it may be understood that for the first module, in a case that the mapping rule locally configured on the first module is different from the mapping rule sent by the core network, the first module prioritizes the mapping rule sent by the core network.

In addition to actively/periodically sending the mapping rule to the second module, the first module may further send the mapping rule to the second module based on a request of the second module. For example, the second module sends a request to the first module to request the mapping rule from the first module. After receiving the request, the first module may send the mapping rule to the second module. Certainly, it may be understood that when the first module receives the request for requesting the mapping rule that is sent by the second module, if the first module does not have the mapping rule, the first module may further request the mapping rule from the core network, and forward the obtained mapping rule to the second module. This is not limited in this embodiment of this application.

It should be noted that in this embodiment of this application, the first module and the second module may jointly negotiate whether the first module independently determines the first service information, or the second module provides the first service information for the first module. In a scenario in which the first module and the second module negotiate that the second module provides the first service information for the first module, the first module may provide the mapping rule for the second module. In a scenario in which the first module and the second module negotiate that the first module determines the first service information, the second module may provide the second service information for the first module.

As an example, that the first module obtains the mapping rule from the second module may be that the first module sends a request for the mapping rule to the second module, and then the second module provides the mapping rule for the first module based on the request of the first module. For example, the first module may request, by using an AT command, the mapping rule from the second module. After receiving the AT command, the second module sends a response message to the second module. The response message includes the mapping rule.

It may be understood that after the second module receives the AT command, if the second module is not configured with the mapping rule, the second module may request the mapping rule from a network device, and send the obtained mapping rule to the first module by using the response message; or if the second module has the mapping rule, the second module may send the mapping rule to the first module by using the response message.

In a possible implementation of this application, that the first module obtains the mapping rule from a network device includes:

The first module obtains the mapping rule from the network device through any one of non-access stratum signaling, access stratum signaling, signaling used for access and mobility management, and signaling used for session management.

As an example, in a case that the first service information is used by a core network to determine a policy, that the second module of the terminal device determines the first service information includes:

The second module determines the first service information based on second service information, where the second service information includes an identifier of the service and/or attributes of the service.

For example, that the second module determines the first service information based on the second service information may be implemented in the following manner: The second module determines the first service information based on the second service information and a mapping rule.

For a specific implementation of determining, by the second module, the first service information based on the second service information and the mapping rule, refer to the specific implementation of determining, by the first module, the first service information based on the second service information and the mapping rule. Details are not described herein again.

In this embodiment of this application, the second module may include an application layer and a system layer. The following uses the application layer and the system layer as an example to describe how the application layer and the system layer support the second module in determining the first service information based on the second service information.

In a possible implementation of this application, the first module includes an application layer and a system layer. Correspondingly, that the second module determines the first service information based on the second service information includes: The application layer determines the second service information. The application layer sends the second service information to the system layer. The system layer determines the first service information based on the second service information.

For example, that the system layer determines the first service information based on the second service information includes: The system layer determines the first service information based on the second service information and a mapping rule. The mapping rule is at least used to reflect the first service information corresponding to the second service information.

In a possible implementation of this application, the second module includes an application layer and a system layer. Correspondingly, that the second module determines the first service information based on the second service information includes: The system layer determines the second service information based on an event in the application layer. The system layer determines the first service information based on the second service information. For example, the event is used to indicate user behavior or content of operation of an application.

For example, the second service information may alternatively be an action of setting a parameter or running an application function of the application layer. Regardless of whether content is actively sent by the APP layer to the OS layer, content from the APP layer to the OS layer may be considered as the second service information. The OS layer may obtain the second service information from the APP layer in various manners, which are not limited to an interface, a Socket, or the like, or may obtain the second service information from a service flow (for example, obtain the second service information by detecting the service flow), obtain the second service information by detecting a behavior of a service/process at the APP layer (for example, detecting that the APP layer allows an application/a function of an application, or sets a parameter), or obtain the second service information based on information in an interface or a Socket (for example, an API interface sends a piece of information, which is used for another function such as setting a parameter or allowing an application/a function of an application, and the OS layer can determine corresponding first service information upon detecting the information).

In a possible implementation of this application, the second module includes an application layer and a system layer, and that the second module determines the first service information based on the second service information may be specifically implemented in the following manner:
The application layer determines the first service information based on the second service information. The application layer sends the first service information to the system layer.

For example, that the application layer determines the first service information based on the second service information includes:
The application layer determines the first service information based on the second service information and a mapping rule.

The following describes how the application layer sends the first service information or the second service information to the system layer. For example, the application layer sends the first service information or the second service information to the system layer via an interface between the application layer and the system layer.

For example, the application layer sends the first service information or the second service information to the system layer via an application programming interface, or the application layer carries the first service information or the second service information in a socket Socket.

In a possible implementation of this application, that the second module sends the first service information to the first module of the terminal device includes: The system layer sends the first service information to the first module.

In a possible implementation of this application, that the second module sends the second service information to the first module of the terminal device includes: The system layer sends the second service information to the first module.

As an example, as shown in FIG. 8, step 602 in this embodiment of this application may be implemented through step 803: The first module sends the first service information to the core network, and correspondingly, the core network receives the first service information from the first module of the terminal device. For a specific implementation of step 804, refer to the description of step 603. Details are not described herein again.

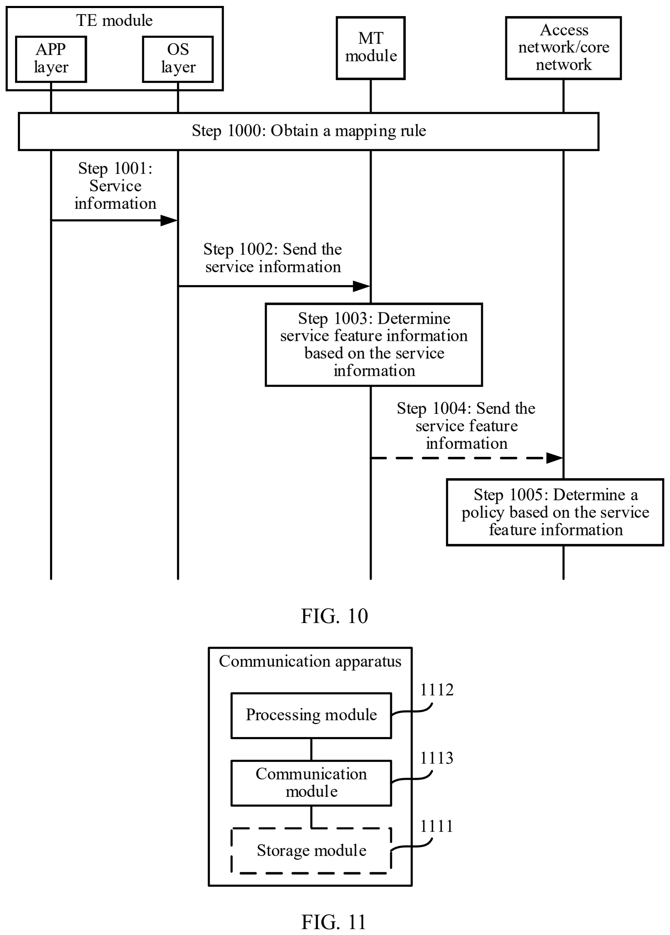

The following describes in detail a specific procedure of the provided communication method with reference to FIG. 9 and FIG. 10 by using an example in which the first module is an MT module, the second module is a TE module, the first service information is service feature information, and the second service information is service information.

FIG. 9 is a specific schematic flowchart of a communication method according to an embodiment of this application. The method includes:
Step 900: A terminal device obtains a mapping rule, where the mapping rule is at least used to determine service feature information based on service information.

As an example, the mapping rule includes a correspondence between service information of a service and service feature information of the service, or a method for determining service feature information based on service information, or a function for converting service information into service feature information.

For example, the correspondence between the service information of the service and the service feature information of the service may be a table, and the terminal may directly determine, based on the table, the service feature information corresponding to the service information.

For example, the method for determining the service feature information based on the service information may be mathematical formula calculation, or determination through internal logic of the terminal device (internal logic implemented at an APP layer/an OS layer/chip hardware). The mapping rule may alternatively be a table. For example, a specific type of service information needs to be calculated using a formula to obtain corresponding service feature information. For example, service information is inputted into the terminal device, and the terminal device may output corresponding service feature information through the internal logic.

It should be noted that when the terminal device determines the service feature information based on the service information through the internal logic, the internal logic of the terminal device is not limited in this embodiment of this application. For example, when same service information is inputted each time, different service feature information may be outputted at different times and in different terminal device/network statuses.

For example, the function of converting service information into service feature information may refer to a machine learning model, a complex function, or the like. That is, after obtaining this function, the terminal may use this function to obtain service feature information corresponding to service information, or may have a table. For example, a specific type of service information needs to be inputted into a specific model to obtain corresponding service feature information.

A "service" may refer to an application (APP), a process, or the like of the terminal device (the service may run at an application layer or an operating system layer). If the service runs at the operating system layer, the operating system layer may perceive the service information and determine the service feature information.

In this embodiment of this application, the service information and the service feature information may be the same. Certainly, content of the service information and content of the service feature information may be different. This is not limited in this embodiment of this application. Alternatively, the service information may be content that can be identified by the 5G-AN/CN, or may be content that cannot be identified by the 5G-AN/CN.

As an example, the service information is used to identify a service or a setting/attribute/feature of a service, and may be an APP ID, an IP 5-tuple/3-tuple, a resolution, a frame rate, a bit rate, a transport protocol, uplink and/or downlink burst arrival time, an uplink and/or downlink burst periodicity, an uplink and/or downlink burst data volume, an average burst size, an average burst data packet size, a maximum burst size, a maximum burst data packet size, or the like. For example, the IP 5-tuple is a set of five values: a source IP address, source port number, a destination IP address, destination port number, and a transport layer protocol.

The service feature information indicates a feature of a service, and may be a periodicity, a maximum burst volume/size, uplink and/or downlink burst arrival time, an uplink and/or downlink burst data volume, a frame rate, a bit rate, a resolution, a transport protocol, a burst size, a burst data packet size, a traffic direction, a time domain, time to live, a burst arrival time adaptation or burst arrival time window capability, a periodicity range, or the like.

In addition to these parameters, the service feature information may alternatively be any other information that can reflect some attributes, settings, features, and the like of the service/application. For example, the service information may alternatively be an action of setting a parameter or running an application function of the application layer.

Service information refers to some attributes, settings, features, and the like of the service or application, such as a frame rate and a resolution set in Tencent Video, which is content related to a service. Service feature information includes a periodicity, burst arrival time, and the like of a service, and indicates a feature of a service on a terminal to the 5G-AN/CN.

Determination of a mapping rule may refer to generation of a mapping rule by an operator and a service provider based on a protocol, or determination of a mapping rule by a service provider based on a feature of an application, or defining of a mapping rule by a chip manufacturer, an operating system developer, a terminal device manufacturer, or the like. A method for determining the mapping rule is not limited.

In addition, content of the mapping rule includes, for example, a correspondence between a frame rate and a periodicity, a correspondence between different types of services, such as a game/video, and different burst time, and the like. An objective of the mapping rule is to convert information related to an APP into information that can be identified by the 5G-AN/CN and that indicates a feature of a service. Specific content, a form, a mapping method, and a mapping process of the mapping rule are not limited.

As an example, step 900 is an optional step, that is, step 900 may be omitted.

As an example, step 900 may be implemented in the following manner:
Step 900a: The terminal device is locally configured with a mapping rule.

For example, a mapping rule is configured on a TE module/MT module of the terminal device. For example, the TE module/MT module is stored in hardware of a chip when manufactured, an upper-layer application instructs the TE module/MT module to store the mapping rule, an operator stores the mapping rule in the TE module/MT module/USIM chip when the terminal device is purchased/registered, or the like.

Alternatively, a mapping rule may be configured in software at an APP layer/OS layer. For example, an installation package of the APP layer includes a mapping rule of the APP layer, or a storage mapping rule is attached when an OS is installed, or when the terminal device is connected to a network, the APP layer/OS layer allows the application layer to obtain the mapping rule from a server.

Step 900b-1: An MT module of the terminal device obtains the mapping rule from the 5G-AN/CN.

For example, the 5G-AN/CN delivers the mapping rule to the MT module (for example, the MT module obtains the mapping rule from an access network/core network through any one of non-access stratum signaling (NAS message), access stratum signaling (AS message), access and mobility management (access and mobility management, AM) signaling, session management (session management, SM) signaling, and a user plane message such as a router advertisement (router advertisement, RA) message). A delivery manner and timing are not limited in this embodiment of this application.

For example, the 5G-AN/CN may actively send the mapping rule to the MT module of the terminal device, or the terminal device actively sends a request for the mapping rule to the 5G-AN/CN through the MT module, and then the 5G-AN/CN delivers the mapping rule to the MT module of the terminal device based on the request of the terminal device. Specifically, after receiving the mapping rule, the MT module may configure the mapping rule on the MT module, or the MT module sends the mapping rule to a TE module and then configures the mapping rule on the TE module.

Step 900b-2: The MT module sends the mapping rule to a TE module.

The MT module may send the mapping rule to the TE module after the TE module requests the mapping rule from the MT module. For example, the mapping rule is carried in a response message of an AT command. Alternatively, the MT module may actively send the mapping rule to the TE module. This is the same as step 905. This is not limited in this embodiment of this application.

Alternatively, the TE module of the terminal device obtains the mapping rule from an access network/core network through any one of non-access stratum signaling (NAS message), access stratum signaling (AS message), signaling for access and mobility management (access and mobility management, NAS AM), signaling for session management (session management, NAS SM), and a user plane message such as a router advertisement (router advertisement, RA) message.

Step 901a: An APP layer determines service information.

As an example, step 901a may be implemented in the following manner: For example, a user sets a parameter, such as a frame rate, on a user interaction interface. In this case, the APP layer obtains the service information. Alternatively, the APP layer is bound to some service information, so that whenever the APP layer provides the service information, the service information is provided accordingly. Alternatively, the APP layer locally generates service information or the like based on internal logic. This is not limited in this embodiment of this application. If the application layer and the operating system layer are regarded as a same layer, or the application is a process in the operating system layer, this step involves either a shared layer of the application layer and the operating system layer or the operating system layer obtaining the service information.

Step 901b: The APP layer determines service feature information.

For example, in one aspect, the APP layer may determine the service feature information based on the service information. For example, the APP layer may determine, based on the service information and the mapping rule, the service feature information corresponding to the service information. In this case, a mapping rule is stored in the TE module. The mapping rule stored in the TE module may be preconfigured on the TE module, or may be determined by the TE module in the manner of step 900b-1 and step 900b-2. This is not limited in this embodiment of this application.

For the APP layer, the service feature information corresponding to the service information may be determined based on the mapping rule. Certainly, the APP layer may alternatively directly determine the service feature information (for example, the APP is configured with the corresponding service feature information, or the APP layer determines the service feature information based on local logic and user settings).

It may be understood that in a case that the APP layer determines the service feature information, the APP layer sends the service feature information to the OS layer through step 902. In a case that the APP layer does not determine the service feature information (that is, the APP layer does not perform step 901b), the APP layer sends the service information to the OS layer through step 902. Step 901b and step 904 are mutually exclusive steps. When step 901b is performed, a solution of determining, by the APP layer, the service feature information is implemented. When step 904 is performed, a solution of determining, by the OS layer, the service feature information is implemented.

Step 902: The APP layer sends the service information or the service feature information to the OS layer.

As an example, step 902 may be implemented in the following manner: The application layer sends the service information or the service feature information to the system layer via an interface between the application layer and the system layer.

As an example, the interface between the application layer and the system layer may be an API interface, a Socket socket, or the like. The interface between the application layer and the system layer is not specifically limited in this embodiment of this application, provided that the interface is an interface, a physical path/link, or a logical path/link that connects the application layer and the system layer.

As a specific implementation, the application layer may send the service information of the service or the service feature information of the service to the system layer via the interface between the application layer and the system layer in the following manner: The APP layer sends the service information/service feature information to the system layer by invoking a dedicated API interface, or may send the service information/service feature information (as a part of parameters/content) via a universal API interface, or may send the service information/service feature information via some privately implemented interfaces between the APP layer and the OS layer.

For example, the requestNetwork function in the native service ConnectivityManager of the Android operating system is used to request a network that satisfies a set of network capabilities. This function can be used to support the APP layer in sending service information or service feature information to the OS layer.

As another specific implementation, the application layer may send the service information of the service or the service feature information of the service to the operating system layer via an interface between the application layer and the system layer in the following manner: the APP layer transmits the service information/service feature information to the OS layer by carrying the service information/service feature information in some parameters in the Socket.

For example, a parameter "traffic characteristic" is added to the Socket function, that is, int Socket (int domain, int type, int protocol, int traffic characteristic), so as to provide the service information/service feature information to the OS layer via the Socket.

It should be noted that the foregoing is merely an example in which the APP layer transfers the service information/service feature information between the APP layer and the OS layer via an API interface, a Socket socket, or the like. A specific manner of transferring the service information/service feature information between the APP layer and the OS layer is not limited in this embodiment of this application. Regardless of whether the APP layer actively sends the service information/service feature information to the OS layer, as long as the APP layer has the service information/service feature information and the OS layer obtains the service information/service feature information, it may be considered that the APP layer sends the service information/service feature information to the OS layer.

The OS layer may obtain the service information from the APP layer in various manners, which are not limited to an interface, a Socket, or the like, or may obtain the service information from a service flow (for example, obtain the service information by detecting the service flow), obtain the service information by detecting a behavior of a service/process at the APP layer (for example, detecting that the APP layer allows an application/a function of an application, or sets a parameter), or obtain the service information based on information in an interface or a Socket (for example, an API interface sends information, which is used for another function, such as setting a parameter or allowing an application/a function of an application, and the OS layer can determine corresponding service feature information upon detecting the information).

That the OS layer obtains the service information from the APP layer may alternatively be that the OS layer determines the service information based on an event in the application layer. To be specific, the OS layer may determine, based on internal logic of the system layer or a mapping rule obtained by the system layer, service feature information corresponding to the event after detecting the event in the application layer.

The event may refer to, for example, detecting that the application layer or a user sets some parameters, some content (such as a function of an application) is run, or some features/parameters of an application reach a condition or a threshold. Such an event may be detected by monitoring an application process or analyzing an application packet.

That the OS layer obtains the service information from the APP layer may alternatively be that the OS layer determines the service information based on a process run in the OS layer, or may be that the OS system determines, based on internal logic of the system layer or a mapping rule obtained by the system layer, service feature information corresponding to an event after the event of the process in the OS layer is detected.

Before the OS obtains the service information from the APP layer, the APP layer may obtain the service information in the following manner: For example, a user sets a parameter, such as a frame rate, on a user interaction interface. In this case, the APP layer obtains the service information. Alternatively, the APP layer is bound to some service information, so that whenever the APP layer provides the service information, the service information is provided accordingly. Alternatively, the APP layer locally generates service information based on internal logic. This is not limited in this embodiment of this application. If the application layer and the operating system layer are regarded as a same layer, or the application is a process in the operating system layer, this step involves either a shared layer of the application layer and the operating system layer or the operating system layer obtaining the service information.

Step 903: The TE module obtains a mapping rule from the MT module.

It may be understood that step 903 is an optional step. For example, the TE module requests the mapping rule from the MT module via an AT command or private signaling or interface. This step is performed when the mapping rule is configured on the MT module (for example, step 900b-1 and step 900b-2).

Step 904: The OS layer determines service feature information based on the service information.

It should be noted that in a case that the APP layer does not perform step 901 but sends the service information to the OS layer through step 902, the OS layer performs step 904 to determine the service feature information based on the service information.

When the APP layer performs step 901 and sends the service feature information to the OS layer through step 902, step 904 may be omitted, and after obtaining the service feature information from the APP layer, the OS layer performs step 905.

It may be understood that in a case that the APP layer sends the service information to the OS layer through step 902, the APP layer may further send indication information to the OS layer, to indicate the OS layer to determine the service feature information based on the service information.

In a case that the APP layer sends the service feature information to the OS layer by using 902, the APP layer may further send indication information to the OS layer, to indicate the OS layer to send the service feature information to the MT module.

Specifically, the OS layer obtains the service information from the APP layer, and the OS layer determines the service feature information based on a mapping rule configured on the OS/obtained from the TE module, a local configuration, or the like.

Alternatively, the OS layer may detect that some APP layers run or set some parameters, some content is run, or some features/parameters of an application reach a condition or threshold, and determine the service feature information based on an event detected by the OS and information such as a locally configured mapping rule. A manner of determining the service feature information may be determining, by any layer of the OS, the service feature information, for example, a system runtime library layer or a Linux kernel layer of the Android operating system. Alternatively, the TE chip hardware may determine the service feature information. Alternatively, the OS layer and the TE module may jointly determine the service feature information in a specific manner.

In this embodiment of this application, this step protects an operation of determining, by the OS layer/TE module, the service feature information. Whether the OS layer or the TE module or the OS layer and the TE module jointly determine the service feature information is not limited, and a specific manner of determining the service feature information is not limited. When the OS layer determines the service feature information by this method, step 902 may not be performed.

Step 905: The TE module sends the service feature information to the MT module.

For a terminal device on which a TE module and an MT module are separated, the TE module may send the service feature information to the MT module in the following manner: The TE module sends an AT command to the MT module. The AT command may include the service feature information (such as AT command + CGTFT, a new AT command, or AT command + CMGC carrying a short message). A private interface of a terminal module or chip may transfer the service feature information (such as an interface defined by the chip manufacturer Qualcomm).

For a terminal device on which a TE module and an MT module are deployed together (for example, on a same chip), service feature information is transmitted to the MT module through internal inter-process communication or a private interface.

A manner in which the TE module sends the service feature information to the MT module, a carried message, and the like are not limited.

It should be noted that the APP layer and the OS layer are software installed on the TE module. After the OS layer determines the service feature information, using the Android operating system as an example, a Linux kernel layer may control chip hardware, interact with the chip hardware, or the like, to generate a message that may include the service feature information and that is used to transfer information between the TE module and the MT module, such as an AT command, so as to send the service feature information from the OS layer to the MT chip. A manner in which the service feature information is transferred from the OS layer to a TE chip and then to the MT module may be different for OS layers of different versions and chips of different standards. This step of this application protects an operation of transferring the service feature information from the OS layer/TE module to the MT module, and the transfer manner is not limited.

Step 906: The MT module sends the service feature information to the 5G-AN/CN.

As an example, the MT module sends the service feature information to the 5G-AN/CN via a first message.

The first message carries the service feature information. An example in which the MT module sends the service feature information to the 5G-AN is used, and the first message may be an AS message, an AN message, or the like. An example in which the MT module sends the service feature information to the 5G-CN is used, and the first message may be an NAS message.

The NAS message carries the service feature information, and may be a session management NAS message such as a PDU SESSION MODIFICATION REQUEST, or may be an access and mobility management NAS message such as REGISTRATION REQUEST. Alternatively, the message may be another NAS message, or may be a user plane message such as a router advertisement message, or may be a message between the MT and the 5G-AN/CN in any form to transfer the service feature information. A message carried is not limited.

Step 907: The 5G-AN/CN determines a policy based on the service feature information.

The policy determined by the 5G-AN/CN based on the service feature information may be a quality of service (quality of service, QoS) control policy. The 5G QoS model is based on a QoS flow. A QoS flow is a minimum granularity for QoS differentiation in a protocol data unit (protocol data unit, PDU) session. User plane traffic of a same QoS flow in a PDU session is processed by the same traffic forwarding. Different QoS flows have different QoS parameters. An SMF network element controls a terminal, an RAN, and a UPF network element to perform traffic forwarding processing on the QoS flows based on the QoS parameters. The QoS parameters include a 5G QoS identifier (5G QoS identifier, 5QI), an allocation and retention priority (Allocation and Retention Priority, ARP), a reflective QoS attribution (Reflective QoS Attribution, RQA), a guaranteed flow bit rate (Guaranteed Flow Bit Rate, GFBR), a maximum flow bit rate (Maximum Flow Bit Rate, MFBR), notification control, a maximum packet loss rate, and the like. The 5QI includes a resource type, a priority, a packet delay budget (packet delay budget, PDB), a packet error rate (Packet Error Rate, PER), an average window, and a maximum data burst volume (Maximum Data Burst Volume, MDBV).

A manner in which the 5G-AN/CN determines the policy based on the service feature information may be: determining a QoS parameter based on the service feature information, or considering impact of the service feature information when determining the policy. In other words, the determined policy is associated with the service feature information. A specific manner of generating the policy based on the service feature information is not limited.

For example, in a possible implementation, the maximum burst volume/size (Maximum Burst Size) may be used to set the maximum data burst volume (Maximum Data Burst Volume, MDBV) in the QoS parameters. That is, the maximum burst volume/size is considered to be a maximum data volume within a time period equal to a value of the 5G access network packet delay budget (5G-AN PDB) of the 5QI. A maximum value of the burst volume/size is mapped to a 5QI whose MDBV is equal to or greater than the burst size For a QoS flow, maximum burst size to be allocated to this QoS flow may be similarly mapped to a 5QI whose MDBV is equal to or greater than the burst size.

FIG. 10 shows a specific embodiment of another communication method according to this application. A difference between this embodiment and the embodiment shown in FIG. 9 lies in that in the embodiment shown in FIG. 10, an MT module determines service feature information, and provides the service feature information for the 5G-AN/CN. A solution described in the embodiment shown in FIG. 9 is as follows:

The TE module determines the service feature information, and the MT module provides the service feature information for the 5G-AN/CN. The following describes in detail how the MT module determines the service feature information with reference to FIG. 10. The method includes:
Step 1000: A terminal device obtains a mapping rule. The mapping rule is at least used to determine service feature information based on service information.

For example, an MT module in the terminal device obtains the mapping rule from a core network. Alternatively, the mapping rule is preconfigured on the MT module.

For example, the mapping rule may be configured on hardware of the MT module. For example, the mapping rule is stored in hardware when a chip is manufactured, or an upper-layer application instructs a chip to store the mapping rule, or a terminal device manufacturer stores the mapping rule in hardware (for example, a chip) when the terminal device is delivered from a factory, or an operator stores the mapping rule in hardware (for example, a chip) when the terminal device is purchased/registered.

For content of the mapping rule, refer to the embodiment shown in FIG. 9. Details are not described herein again.

It may be understood that in the embodiment shown in FIG. 9, after the MT module obtains the mapping rule, the MT module may further send the mapping rule to the TE module, so that the TE module determines the service feature information based on the mapping rule and the service information. However, in the embodiment shown in FIG. 10, after the MT module obtains the mapping rule, the MT module omits the step of sending the mapping rule to the TE module.

Step 1001: An APP layer sends service information to an OS layer, and correspondingly, the OS layer receives the service information from the APP layer.

For a specific implementation of step 1001, refer to the specific implementation of step 902. A difference is that in step 902, the service information or the service feature information is sent, while in step 1001, the service information is sent.

It may be understood that before step 1001, the method may further include: the APP layer obtains the service information. For a manner of obtaining the service information by the APP layer, refer to the description in step 901a. Details are not described herein again.

For example, step 1001 may be implemented in the following manner: The APP layer invokes an API interface to provide the service information for the OS layer.

For example, the requestNetwork function in the native service ConnectivityManager of the Android operating system is used to request a network that satisfies a set of network capabilities. This function may be extended to support the APP layer to send the service information to the OS layer.

For example, step 1001 may be implemented in the following manner: The APP layer invokes a Socket parameter to provide the service information for the OS layer.

For example, a parameter "traffic characteristic", that is, int Socket (int domain, int type, int protocol, int traffic characteristic), is added to the Socket function to provide the service information to the OS layer via the Socket.

A difference between the embodiment shown in FIG. 10 and the embodiment shown in FIG. 9 lies in that in the embodiment shown in FIG. 10, the APP layer and the OS layer do not determine the service feature information, and the service information is sent from the APP layer to the OS layer, and then sent from the OS layer/TE module to the MT module.

Step 1002: A TE module sends service information to an MT module. Correspondingly, the MT module receives the service information from the TE module. Alternatively, the MT module may detect a service flow and/or signaling sent by the TE module through the MT module, and determine the service information based on the service flow and/or signaling. For example, the service flow and/or signaling includes the service information, or the service information is determined based on content of the service flow and/or signaling.

For a specific implementation of step 1002 in the embodiment shown in FIG. 10, refer to specific implementation of sending, by the TE module, the service feature information to the MT module in step 905 in FIG. 9. Details are not described herein again.

Step 1003: The MT module determines service feature information.

For example, the MT module receives the service information sent by the TE module (for example, via an AT command), and the MT module converts, based on a local configuration/mapping rule, the service information into service feature information that can be identified by the 5G-AN/CN (for example, converts a frame rate into a periodicity Periodicity, and converts a service type into burst time. This conversion process may occur on hardware of the MT module. If the MT module bears a software layer, the MT module may also bear the software layer to determine the service feature information).

Step 1003 protects an operation of determining, by the MT module, the service feature information, and a specific manner of determining the service feature information is not limited.

Step 1004: The MT module sends the service feature information to the 5G-AN/CN. Correspondingly, the 5G-AN/CN receives the service feature information from the MT chip.

An NAS message may carry the service feature information, and may be, for example, PDU SESSION MODIFICATION REQUEST, or may be an access and mobility management NAS message, for example, REGISTRATION REQUEST. Alternatively, the message may be another NAS message, or may be a user plane message such as a router advertisement message, or may be a message between the MT and the 5G-AN/CN in any form to transfer the service feature information. A message carried is not limited.

Step 1005: The 5G-AN/CN generates a policy based on the service feature information.

For a specific implementation of step 1005, refer to the specific implementation of step 907 in the foregoing embodiment. Details are not described herein again.

In the embodiment shown in FIG. 10, it may be implemented that the TE module within the terminal device provides the service information for the MT module within the terminal device, and then the MT module determines the service feature information based on the service information. Then, the MT module sends the service feature information to the 5G-AN/CN. In this way, the effect of providing the service feature information by the terminal device for the 5G-AN/CN and determining the policy by the 5G-AN/CN is achieved.

The foregoing mainly describes the solutions in the embodiments of this application from a perspective of interaction between network elements. It may be understood that to implement the foregoing functions, each network element, for example, the terminal device, and the first module and the second module in the terminal device, includes a corresponding structure and/or software module for performing each function. A person skilled in the art should easily be aware that in combination with units and algorithm steps of the examples described in embodiments disclosed in this specification, this application may be implemented in the form of hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes outside the scope of this application.

In the embodiments of this application, functional unit division may be performed based on the foregoing method examples of the terminal device, and the first module and the second module in the terminal device. For example, each functional unit may be obtained through division based on each corresponding function, or two or more functions may be integrated into one processing unit. The integrated unit may be implemented in a form of hardware, or may be implemented in a form of a software functional unit. It should be noted that in the embodiments of this application, division into the units is an example, and is merely a logical function division. In actual implementation, another division manner may be used.

The foregoing describes the method in the embodiments of this application with reference to FIG. 6 to FIG. 10. The following describes a communication apparatus that is provided in embodiments of this application and that performs the foregoing method. A person skilled in the art may understand that the method and the apparatus may be mutually combined and referenced. The communication apparatus provided in the embodiments of this application may perform the steps performed by the terminal device, and the first module and the second module in the terminal device in the communication methods shown in FIG. 6 to FIG. 10.

In a case that an integrated unit is used, FIG. 11 shows a communication apparatus involved in the foregoing embodiments. The communication apparatus may include a communication module 1113 and a processing module 1112.

In an optional implementation, the communication apparatus may further include a storage module 1111, configured to store program code and data of the communication apparatus.

As an example, the communication apparatus is a terminal device, or is a chip used in a terminal device. In this case, the communication module 1113 is configured to support the communication apparatus in communicating with an external network element (for example, a core network or a second module). For example, the communication module 1113 is configured to perform a signal receiving and sending operation of the terminal device or the first module in the foregoing method embodiments. The processing module 1112 is configured to perform a signal processing operation of the terminal device or the first module in the foregoing method embodiments.

According to one aspect, in an embodiment of this application, the communication module 1113 is configured to perform a sending operation performed by the terminal device in step 602 in FIG. 6 in the foregoing embodiments. The processing module 1112 is configured to support the communication apparatus in performing step 601.

For example, the communication module 1113 is further configured to perform a receiving operation in step 701 and a sending operation in step 703 in FIG. 7 in the foregoing embodiments. The processing module 1112 is further configured to perform step 702 in FIG. 7 in the foregoing embodiments.

For example, the communication module 1113 is further configured to perform a sending operation in step 800 and a receiving operation in step 802 in FIG. 8 in the foregoing embodiments. The communication module 1113 is further configured to perform a sending operation in step 803 in FIG. 8 in the foregoing embodiments.

As still another example, the communication apparatus is a second module in a terminal device, or a chip used in a terminal device. In this case, the communication module 1113 is configured to support the communication apparatus in communicating with an external network element (for example, the first terminal). For example, the communication module 1113 is configured to perform a signal receiving and sending operation of the second module of the terminal device in the foregoing method embodiments. The processing module 1112 is configured to perform a signal processing operation of the second module of the terminal device in the foregoing method embodiments.

According to one aspect, in an embodiment of this application, the communication module 1113 is configured to perform a sending operation performed by the second module of the terminal device in step 701 in FIG. 7 in the foregoing embodiments.

In another aspect, in an embodiment of this application, the communication module 1113 is configured to perform a receiving operation performed by the second module of the terminal device in step 800 and a sending operation in step 802 in FIG. 8 in the foregoing embodiments. The processing module 1112 is configured to perform step 801 in FIG. 8 in the foregoing embodiments.

The processing module 1112 may be a processor or controller, for example, may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The communication module may be a transceiver, a transceiver circuit, a communication interface, or the like. A storage module may be a memory.

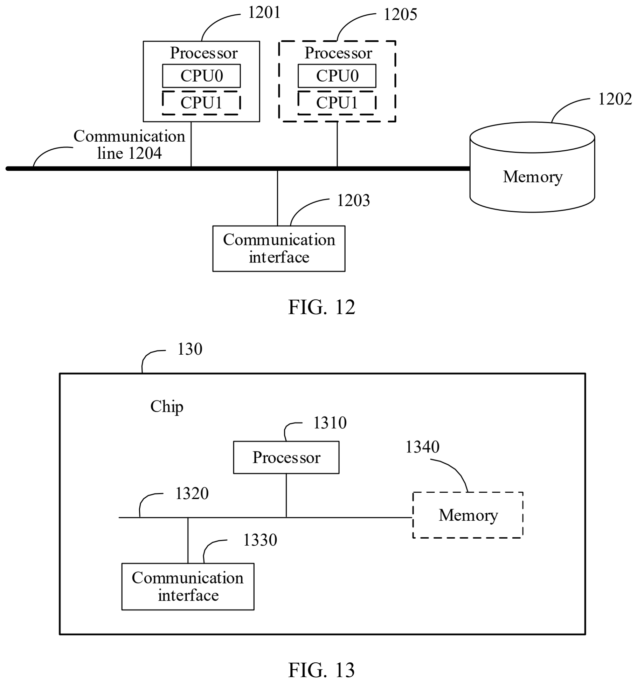

When the processing module 1112 is a processor 1201 or a processor 1205, the communication module 1113 is a communication interface 1203, and the storage module 1111 is a memory 1202, the communication apparatus in this application may be a communication device shown in FIG. 12.

FIG. 12 is a diagram of a hardware structure of a communication device according to an embodiment of this application. For structures of a first network element and a data analysis network element in this embodiment of this application, refer to the diagram of the structure of the communication device shown in FIG. 12. The communication device includes a processor 1201, a communication line 1204, and at least one communication interface (a communication interface 1203 is used as an example in FIG. 12 for description).

The processor 1201 may be a general-purpose central processing unit (central processing unit, CPU), a microprocessor, an application-specific integrated circuit (application-specific integrated circuit, ASIC), or one or more integrated circuits for controlling program execution of the solutions in this application.

The communication line 1204 may include a path for transmitting information between the foregoing components.

The communication interface 1203 is configured to exchange information with another apparatus through, for example, any type of apparatus such as a transceiver, and is configured to communicate with another device or a communication network, for example, an Ethernet, a radio access network (radio access network, RAN), or wireless local area networks (wireless local area networks, WLAN).

Optionally, the communication device may further include a memory 1202.

The memory 1202 may be a read-only memory (read-only memory, ROM) or another type of static storage device that can store static information and instructions, a random access memory (random access memory, RAM) or another type of dynamic storage device that can store information and instructions; an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in a form of an instruction or a data structure and that can be accessed by a computer, but is not limited thereto. The memory may exist independently and is connected to the processor via the communication line 1204. The memory may alternatively be integrated with the processor.

The memory 1202 is configured to store computer-executable instructions for executing the solutions in this application, and the processor 1201 controls execution of the computer-executable instructions. The processor 1201 is configured to execute the computer-executable instructions stored in the memory 1202, to implement a communication method provided in the following embodiments of this application.

Optionally, the computer-executable instructions in this embodiment of this application may also be referred to as application code. This is not specifically limited in this embodiment of this application.

During specific implementation, as an embodiment, the processor 1201 may include one or more CPUs, such as CPU0 and CPU1 in FIG. 12.

During specific implementation, as an embodiment, the communication device may include a plurality of processors, for example, the processor 1201 and a processor 1205 in FIG. 12. Each of the processors may be a single-core (single-CPU) processor, or may be a multi-core (multi-CPU) processor. The processor herein may be one or more devices, circuits, and/or processing kernels configured to process data (for example, computer program instructions).

For steps performed by the processor 1201 and the processor 1205, refer to the steps performed by the processing module 1112. For steps performed by the communication interface 1203, refer to the steps performed by the communication module 1113.

FIG. 13 is a diagram of a structure of a chip 130 according to an embodiment of this application. The chip 130 includes one or more than two (including two) processors 1310 and a communication interface 1330.

Optionally, the chip 130 further includes a memory 1340. The memory 1340 may include a read-only memory and a random access memory, and provide operation instructions and data for the processor 1310. A part of the memory 1340 may further include a non-volatile random access memory (non-volatile random access memory, NVRAM).

In some implementations, the memory 1340 stores the following elements: an executable module or a data structure, a subset thereof, or an extended set thereof.

In this embodiment of this application, a corresponding operation is performed by invoking the operation instructions (the operation instructions may be stored in an operating system) stored in the memory 1340.

In a possible implementation, a structure of a first module is similar to a structure of a second module, and different apparatuses can use different chips to implement respective functions.

The processor 1310 controls a processing operation of any one of the first terminal and the second terminal, and the processor 1310 may also be referred to as a central processing unit (central processing unit, CPU).

The memory 1340 may include a read-only memory and a random access memory, and provide instructions and data for the processor 1310. A part of the memory 1340 may further include an NVRAM. For example, in an application, the memory 1340, the communication interface 1330, and the memory 1340 are coupled together via a bus system 1320. In addition to a data bus, the bus system 1320 may include a power bus, a control bus, a status signal bus, and the like. However, for clear description, various types of buses in FIG. 13 are marked as the bus system 1320.

The method disclosed in the foregoing embodiments of this application may be applied to the processor 1310, or implemented by the processor 1310. The processor 1310 may be an integrated circuit chip and has a signal processing capability. In an implementation process, each step in the foregoing method may be completed through an integrated logical circuit of hardware in the processor 1310 or instructions in a form of software. The processor 1310 may be a general-purpose processor, digital signal processing (digital signal processing, DSP), an ASIC, a field-programmable gate array (field-programmable gate array, FPGA) or another programmable logic device, a discrete gate or a transistor logic device, or a discrete hardware component. The processor may implement or perform the methods, the steps, and logical block diagrams that are disclosed in the embodiments of this application. The general-purpose processor may be a microprocessor, or the processor may be any conventional processor or the like. The steps in the methods disclosed with reference to the embodiments of this application may be directly performed and completed by a hardware decoding processor, or may be performed and completed by a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1340. The processor 1310 reads information in the memory 1340, and completes the steps in the foregoing method in combination with hardware of the processor.

In a possible implementation, the communication interface 1330 is configured to perform receiving and sending steps of the first module in the embodiments shown in FIG. 6 to FIG. 10. The processor 1310 is configured to perform processing steps of the first module in the embodiments shown in FIG. 6 to FIG. 10.

In another possible implementation, the communication interface 1330 is configured to perform receiving and sending steps of the second module in the embodiments shown in FIG. 6 to FIG. 10. The processor 1310 is configured to perform processing steps of the second module in the embodiments shown in FIG. 6 to FIG. 10.

According to an aspect, a computer-readable storage medium is provided. The computer-readable storage medium stores instructions, and when the instructions are run, functions performed by the first module in FIG. 6 to FIG. 10 are implemented.

According to an aspect, a computer-readable storage medium is provided. The computer-readable storage medium stores instructions, and when the instructions are run, functions performed by the second module in FIG. 6 to FIG. 10 are implemented.

According to an aspect, a computer program product including instructions is provided. The computer program product includes the instructions, and when the instructions are run, functions performed by the second module in FIG. 6 to FIG. 10 are implemented.

According to an aspect, a computer program product including instructions is provided. The computer program product includes the instructions, and when the instructions are run, functions performed by the first module in FIG. 6 to FIG. 10 are implemented.

According to an aspect, a chip is provided. The chip is used in a terminal device, and the chip includes at least one processor and a communication interface. The communication interface is coupled to the at least one processor. The processor is configured to run instructions, to implement functions performed by the first module in FIG. 6 to FIG. 10.

According to an aspect, a chip is provided. The chip is used in a terminal device, and the chip includes at least one processor and a communication interface. The communication interface is coupled to the at least one processor. The processor is configured to run instructions, to implement functions performed by the second module in FIG. 6 to FIG. 10.

An embodiment of this application further provides a communication system. The communication system includes a terminal device and a core network. The terminal device is configured to perform functions performed by the terminal device in FIG. 6 to FIG. 10. The core network is configured to perform functions performed by the core network in FIG. 6 to FIG. 10.

All or some of the foregoing embodiments may be implemented through software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, all or some of procedures or functions in the embodiments of this application are performed. The computer may be a general-purpose computer, a dedicated computer, a computer network, a network device, a user device, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device that integrates one or more usable media, such as a server or a data center. The usable medium may be a magnetic medium, for example, a floppy disk, a hard disk, or a magnetic tape; may be an optical medium, for example, a digital video disc (digital video disc, DVD); or may be a semiconductor medium, for example, a solid state drive (solid state drive, SSD).

Although this application is described with reference to the embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations, or equivalents that cover the scope of this application. It is clearly that a person skilled in the art can make various modifications and variations to this application without departing from the spirit and scope of this application. This application is intended to cover these modifications and variations of this application, provided that they fall within the scope of protection defined by the following claims and their equivalent technologies.

## Claims

1. A communication method, applied to a terminal device, wherein the method comprises:
determining first service information, wherein the first service information is used to describe a feature of a service of the terminal device; and
sending the first service information to a core network, wherein the first service information is used by the core network to determine a policy corresponding to the service.

2. The method according to claim 1, wherein the terminal device comprises a first module and a second module, and determining the first service information comprises:
receiving, by the first module, second service information from the second module; and
determining, by the first module, the first service information based on the second service information, wherein the second service information comprises an identifier of the service and/or an attribute of the service; and
sending the first service information to the core network comprises:
sending, by the first module, the first service information to the core network.

3. The method according to claim 2, wherein determining, by the first module, the first service information based on the second service information comprises:
determining, by the first module, the first service information based on a mapping rule and the second service information, wherein the mapping rule comprises a correspondence between the second service information and the first service information.

4. The method according to claim 3, wherein the mapping rule is from the core network, or the mapping rule is locally configured on the first module.

5. The method according to claim 1, wherein the terminal device comprises a first module and a second module, and determining the first service information comprises:
determining, by the second module, the first service information;
the method further comprises:
sending, by the second module, the first service information to the first module; and
sending the first service information to the core network comprises:
sending, by the first module, the first service information to the core network.

6. The method according to claim 5, wherein determining, by the second module, the first service information comprises:
determining, by the second module, the first service information based on second service information, wherein the second service information comprises an identifier of the service and/or an attribute of the service.

7. The method according to claim 6, wherein the second module comprises an application layer and a system layer, and determining, by the second module, the first service information based on the second service information comprises:
sending, by the application layer, the second service information to the system layer; and
determining, by the system layer, the first service information based on the second service information.

8. The method according to claim 6, wherein the second module comprises an application layer and a system layer, and determining, by the second module, the first service information based on the second service information comprises:
determining, by the system layer, the second service information based on an event of an application in the application layer, wherein the event indicates a behavior of a user of the application or content run by the application; and
determining, by the system layer, the first service information based on the second service information.

9. The method according to claim 6, wherein the second module comprises an application layer and a system layer, and determining, by the second module, the first service information based on the second service information comprises:
determining, by the application layer, the first service information based on the second service information; and
sending, by the application layer, the first service information to the system layer.

10. The method according to claim 9, wherein sending, by the application layer, the first service information to the system layer comprises:
sending, by the application layer, the first service information to the system layer via an application programming interface, or carrying, by the application layer, the first service information in a socket Socket.

11. The method according to any one of claims 7 to 10, wherein sending, by the second module, the first service information to the first module comprises:
sending, by the system layer, the first service information to the first module.

12. The method according to any one of claims 6 to 11, wherein determining the first service information based on the second service information comprises:
determining the first service information based on the second service information and a mapping rule, wherein the mapping rule comprises a correspondence between the second service information and the first service information.

13. The method according to claim 12, wherein the mapping rule is from the first module, or the mapping rule is locally configured.

14. The method according to any one of claims 2 to 13, wherein the first module and the second module are deployed on a same chip, or the first module and the second module are deployed on different chips.

15. A communication apparatus, wherein the communication apparatus comprises a module configured to perform the method according to any one of claims 1 to 14.

16. A communication apparatus, wherein the communication apparatus comprises a processor and a memory, the memory is configured to store program instructions, and the processor is configured to execute the program instructions in the memory, to cause the communication apparatus to perform the method according to any one of claims 1 to 14.

17. A chip system, wherein the chip system comprises a processing module, and the processing module is coupled to a storage module and is configured to perform the method according to any one of claims 1 to 14.

18. A computer-readable storage medium, wherein the computer-readable storage medium stores a computer program, and when the computer program is run, a computer is caused to perform the method according to any one of claims 1 to 14.

19. A computer program product, wherein the computer program product comprises a computer program, and when the computer program is run, the method according to any one of claims 1 to 14 is performed.

20. A communication method, wherein the method comprises:
determining, by a terminal device, first service information, wherein the first service information is used to describe a feature of a service of the terminal device;
sending, by the terminal device, the first service information to a core network; and
receiving, by the core network, the first service information from the terminal device, and determining, based on the first service information, a policy corresponding to the service.

21. A communication system, wherein the system comprises a terminal device and a core network, the terminal device is configured to perform the method according to any one of claims 1 to 14, and the core network is configured to:
receive the first service information from the terminal device, and determine, based on the first service information, a policy corresponding to the service.
